Europäisches Patentamt

European Patent Office

Office européen des brevets

(19)

(11) Veröffentlichungsnummer: **0 218 876**
**B1**

(12) **EUROPÄISCHE PATENTSCHRIFT**

(45) Veröffentlichungstag der Patentschrift:
24.05.89

(51) Int. Cl.⁴: **C08L 9/00**

(21) Anmeldenummer: 86112058.2

(22) Anmeldetag: 01.09.86

(54) Kautschukmischungen und daraus hergestellte Vulkanisate.

(30) Priorität: 11.09.85 DE 3532358

(43) Veröffentlichungstag der Anmeldung:
22.04.87 Patentblatt 87/17

(45) Bekanntmachung des Hinweises auf die Patenterteilung:
24.05.89 Patentblatt 89/21

(84) Benannte Vertragsstaaten:
DE FR GB IT LU NL

(56) Entgegenhaltungen:
EP-A- 0 012 999
EP-A- 0 090 365
EP-A- 0 102 045
US-A- 3 937 681

(73) Patentinhaber: BAYER AG, Konzernverwaltung RP
Patentabteilung, D-5090 Leverkusen 1 Bayerwerk(DE)

(72) Erfinder: Stollfuss, Bernd, D.I., Am Katterbach 76,
D-5060 Bergisch-Gladbach 2(DE)
Erfinder: Wieder, Wolfgang, Dr., Walter-Flex-Strasse 11,
D-5090 Leverkusen 1(DE)
Erfinder: Nentwig, Wolfgang, Dr., Silesiusstrasse 82,
D-5000 Köln 80(DE)
Erfinder: Stüttgen, Friedel, verstorben, verstorben(DE)

## Beschreibung

Die Erfindung betrifft hochrußgefüllte Kautschukmischungen auf Basis eines speziellen Polybutadiens und die daraus durch Vulkanisation hergestellten Produkte, die sich insbeondere für harte Bauteile von Kraftfahrzeugreifen eignen.

Hinsichtlich der Eigenschaften dieser Bauteile besteht ein großes Interesse an Vulkanisaten, die bei großer Härte eine ausgezeichnete Elastizität und eine äußerst geringe bleibende Verformung nach thermisch dynamischer Belastung aufweisen.

Außerdem wird eine gute Abtriebsbeständigkeit gefordert, insbesondere für die Herstellung von Humpstreifen.

Es ist bekannt, für solche Teile die gewünschte Härte, wie sie z.B. die Humpstreifen erfordern, über eine erhöhte Rußdosierung und/oder Schwefeldosierung zu erzielen. Entsprechende Mischungen basieren in der Regel auf Verschnitten von Naturkautschuk oder synthetischem Polyisopren mit anderen Dien-Kautschuken. Als Dien-kautschuk kommt bei der geforderten Abriebsbeständigkeit vorwiegend Polybutadienkautschuk zum Einsatz, der von seinem Eigenschaftsprofil auch die erforderliche hohe Elastizität und dynamische Belastbarkeit mit sich bringt.

Nachteil der bisher verwendeten Polybutadiene ist jedoch deren schlechte Verarbeitbarkeit, die die Anwendung der vorstehend genannten Verschnitte notwendig werden läßt, um eine unter Praxisbedingungen befriedigende Handhabarkeit der Mischungen zu gewährleisten.

Kautschukmischungen, deren Kautschukanteil nur aus Polybutadien besteht, konnten wegen der schlechten Verarbeitbarkeit bisher nicht eingesetzt werden, obwohl hinsichtlich der mechanischen und dynamischen Eigenschaften gute Ergebnisse zu erwarten gewesen wären.

Aufgabe der Erfindung war es, Kautschukmischungen bereitzustellen, die das gewünschte Eigenschaftbild großer Härte und guter Arbriebbeständigkeit bei ausgezeichneter Elastizität und geringer bleibender Verformung aufweisen.

Diese Aufgabe wird erfindungsgemäß durch ein spezielles Polybutadien in Kombination mit einer großen Menge Ruß gelöst.

Gegenstand der Erfindung sind daher Ruß und andere übliche Mischungbestandteile enthaltende Kautschukmischungen auf Basis Polybutadien, dadurch gekennzeichnet, daß auf 100 Gew.-Teile Kautschuk 50 bis 140 Gew.-Teile Ruß, vorzugsweise 80 bis 120 Gew.-Teile Ruß eingesetzt werden und das Polybutadien eine Mooney-Viskosität ML 1+4 (100°C) von 30 bis 100 ME, vorzugsweise 50 bis 70 ME und eine Brookfield-Viskosität der 5,43 gew.-%igen Lösung in Toluol bei 25°C von 30 bis 100 mPa.s, vorzugsweise 50 bis 70 mPa.s aufweist, wobei das Verhältnis von Mooney-Viskosität zu Brookfield-Viskosität 1:0,5 - 2,3 vorzugsweise 1:0,7 - 1,5 ME/mPa.s beträgt.

Die erfindungsgemäß verwendeten Polymere sind sternförmig verzweigte Polymerisate des Butadiens, die durch anionische Lösungspolymerisation von Butadien mit anschließender Kupplungsreaktion hergestellt werden. Die Herstellung solcher Polymerisate ist beispielsweise aus den US-Patenten 3 281 833 und 3 349 071 bekannt.

Die Polymeren werden erhalten durch

1. Herstellung eines "lebenden" Butadienpolymeren durch Polymerisation von Butadien mit einem Katalysator aus der Gruppe der lithiumorganischen Verbindungen in einem inerten Kohlenwasserstoff:

2. Herstellung eines sternförmig verzweigten Butadien-Polymeren durch Umsetzung des gemäß Schritt 1 hergestellten "lebenden" Butadienpolymeren mit einem polyfunktionellen Kopplungsagens.

Zahlreiche Kopplungsagentien sind bekannt, z.B. Siliziumtetrachlorid, Zinntetrachlorid, Kohlensäurederivate wie Phosgen, Halogenkohlensäureester, Dialkylcarbonate oder Bivinylbenzol. Die Herstellung kann nach einem diskontinuierlichen oder kontinuierlichen Verfahren erfolgen. Im Anschluß an die Kopplungsreaktion gemäß Schritt 2 wird der Polymerlösung ein handelsübliches Alterungsschutzmittel zugesetzt. Das Produkt wird durch übliche Aufarbeitungstechniken wie Strippen oder Eindampfen vom Lösungsmittel befreit.

Aus den erfindungsgemäßen Kautschukmischungen werden durch Schwefelvulkanisation Vulkanisate hergestellt, die ein weiterer Gegenstand der Erfindung sind.

Die Schwefelmenge beträgt 1,5 bis 5,0 Gew.-%, vorzugsweise 2,0 bis 3,0 Gew.-%, bezogen auf Kautschukfeststoff. Die Vulkanisation wird bei 150 bis 190°C durchgeführt und dauert in der Regel 10 bis 45 Minuten.

Die Vulkanisationsmischungen enthalten übliche Vulkanisationsbeschleuniger und -zusatzbeschleuniger, wobei die Hauptbeschleuniger in einer Menge von 0,7 bis 1,5 Gew.-% und die Zusatzbeschleuniger in einer Menge von 0,05 bis 0,5 Gew.-%, jeweils bezogen auf Kautschukfeststoff, zum Einsatz kommen. Es handelt sich bei den Vulkanisationsbeschleunigern vorzugsweise um Sulfenamid- oder Mercaptoverbindungen, bei den Zusatzbeschleunigern um Thiuram- und Guanidinverbindungen.

Ein Teil des Polybutadiens kann durch andere Dien-Kautschuke, beispielsweise Polyisopren, Styrol-, Butadien-Copolymer oder Naturkautschuk, ersetzt sein, allerdings höchstens bis zu einer Menge von 50 Gew.-%, vorzugsweise bis zu 20 Gew.-%.

Bevorzugt ist unverschnittenes Polybutadien der angegebenen Definition.

Neben den bereits genannten Bestandteilen können die Kautschukmischungen 5 bis 30 Gew.-% an Phenolformaldehydharzen, bezogen auf Kautschukfeststoff, enthalten.

Beispiele

Unter Verwendung eines erfindungsgemäßen sternförmig verzweigten Butadien-Polymeren mit einer Mooney-Viskosität ML 1+4, 100°C von 50 ME und einer Lösungsviskosität (5,43 gew.-%ig in Toluol bei 25°C) von 60 mPa.s - nachfolgend als Polymer A bezeichnet - wurden in einem Innenmischer die in Tabelle 1 aufgeführten Mischungen hergestellt, wobei der Vernetzungsmittelzusatz in einem zweiten Arbeitsschritt auf der Abkühlwalze erfolgte. Die Vergleichsmischungen wurden unter Verwendung eines titankatalysierten Polybutadiens - nachfolgen als Polymer B bezeichnet - in gleicher Weise hergestellt.

Polymer B hatte eine Mooneyviskosität ML 1+4, 100°C von 55 ME und eine Lösungsviskosität (5,43 gew.-%ig in Toluol bei 25°C) von 165 mPas.

Das Verhalten der Polymere bei der Mischungsherstellung und bei der Weiterverarbeitung der Mischungen wird wie auch ihre Vulkanisateigenschaften in nachstehender Tabelle dargestellt.

Tabelle 1

|  | Beispiele | | | Vergleichsbeispiele | |
|---|---|---|---|---|---|
|  | 1 | 2 | 3 | 1 | 2 |
| Mischungsaufbau |  |  |  |  |  |
| Polymer A | 100 | 100 | 100 | – | – |
| Polymer B | – | – | – | 75 | 100 |
| Naturkautschuk | – | – | – | 25 | – |
| Ruß N326 | 80 | 80 | 100 | 80 | 80 |
| Stearinsäure | 2 | 2 | 2 | 2 | 2 |
| Fichtenholzteer[1] | 4 | 4 | 4 | 4 | 4 |
| Kondensationsprodukt aus t-Butylphenol und Acetylen[2] | 4 | 4 | 4 | 4 | 4 |
| Zinkoxid | 5 | 5 | 5 | 5 | 5 |
| Alterungsschutzmittel IPPD | 2,5 | 2,5 | 2,5 | 2,5 | 2,5 |
| Alterungsschutzmittel TMQ | 1,5 | 1,5 | 1,5 | 1,5 | 1,5 |
| Vulkanisationsbeschleuniger DCBS | 1,2 | 1,2 | 1,2 | 1,2 | 1,2 |
| Vulkanisationsbeschleuniger TMTM | 0,1 | 0,1 | 0,1 | 0,1 | 0,1 |
| Schwefel | 3,5 | 2,0 | 2,0 | 2,0 | 3,5 |

[1] verwendet wurde Turene® 20
[2] verwendet wurde Koresin®

Tabelle 1 (Fortsetzung)

| | Beispiele | | | Vergleichsbeispiele | |
|---|---|---|---|---|---|
| | 1 | 2 | 3 | 1 | 2 |
| Verarbeitungsbeurteilung | | | | | |
| Mischungsherstellung | | | | | |
| Knetgut | kompakt, glänzend | | | | einzelne Stücke |
| Walzverhalten | gut, sofortige Fellbildung | | | Leicht beutelnd | stark beutelnd |
| Fertigmischung | glatt, glänzend, homogen | | | leicht rauh, glänzend | stark rauh |
| Extrusion | | | | | |
| Oberfläche | glatt, glänzend | | | ohne Einrisse | viele Einrisse |
| Kantenausbildung | gut, ohne Einrisse | | | ohne Einrisse | viele Einrisse |

Tabelle 1 (Fortsetzung)

| | Beispiele | | | Vergleichsbeispiele | |
|---|---|---|---|---|---|
| | 1 | 2 | 3 | 1 | 2 |
| Vulkanisateigenschaft | | | | | |
| Spannung bei 100%, MPa | 4,3 | 4,9 | 5,1 | 4,5 | 6,0 |
| Härte bei 23°C, Shore A | 76 | 79 | 81 | 79 | 83 |
| Härte bei 70°C, Shore A | 74 | 76 | 76 | 75 | 78 |
| Stoßelastizität bei 23°C, % | 45 | 43 | 34 | 40 | 45 |
| Stoßelastizität bei 70°C, % | 54 | 53 | 42 | 47 | 53 |
| DIN-Abrieb, mm$^3$ | 30 | 30 | 32 | 30 | 28 |
| Kompressions-Flexometer | (Hub: 4,45 mm, Last: 0,981 MPa, Temperatur: 100°C, Laufzeit: 25 min) | | | | |
| Temperaturerhöhung, °C | 36 | 34 | 40 | 50 | 46 |
| Bleibende Verformung, % | 7 | 5 | 9 | 14 | 19 |

Die Mischungen der Beispiele 1 bis 3 besitzen eine bessere Verarbeitbarkeit und demonstrieren die erfindungsgemäßen Vorteile gegenüber dem praxisnahen Vergleichsbeispiel 1. Darüberhinaus wird gefunden, daß mit dem erfindugsgemäßen Polymer eine vergleichsweise höhere Elastizität und dynamische Belastbarkeit, verbunden mit deutlichen Vorteilen bei der bleibende Verformung erzielt werden.

**Patentansprüche**

1. Ruß und andere übliche Mischungsbestandteile enthaltende Kautschukmischungen auf Basis Polybutadien, dadurch gekennzeichnet, daß auf 100 Gew.-Teile Kautschuk 50 bis 140 Gew.-Teile Ruß eingesetzt werden und das Polybutadien eine Mooney-Viskosität ML 1+4 (100°C) von 30 bis 100 ME und eine Brookfield-Viskosität der 5,43 gew.-%igen Lösung in Toluol bei 25°C von 30 bis 100 mPa.s aufweist, wobei das Verhältnis von Mooney-Viskosität zu Brookfield-Viskosität 1:0,5 - 2,3 ME/mPa.s beträgt.

2. Mischungen nach Anspruch 1, dadurch gekennzeichnet, daß die Rußmenge 80 bis 120 Gew.-Teile, die Mooney-Viskosität 50 bis 70 ME, die Brookfield-Viskosität 50 bis 70 mPa.s und das Verhältnis der Viskositäten 1:0,7 bis 1,5 ME/mPa.s betragen.

3. Aus den Mischungen gemäß Ansprüchen 1 und 2 durch Schwefelvulkanisation hergestellte Vulkanisate.

## Claims

1. Polybutadiene-based rubber mixtures containing carbon black and other mixture constituents, characterized in that 50 to 140 parts by weight carbon black are used to 100 parts by weight rubber and the polybutadiene has a Mooney viscosity ML-4 (100°C) of 30 to 100 MU and a Brookfield viscosity (5.43% by weight solution in toluene) at 25°C of 30 to 100 mPa.s, the ratio of Mooney viscosity to Brookfield viscosity being 1:0.5–2.3 MU/mPa.s.

2. Mixtures as claimed in claim 1, characterized in that the quantity of carbon black is from 80 to 120 parts by weight, the Mooney viscosity is from 50 to 70 MU, the Brookfield viscosity is from 50 to 70 MU, the Brookfield viscosity is from 50 to 70 mPa.s and the ratio of the Mooney to the Brookfield viscosity is 1:0.7–1.5 MU/mPa.s.

3. Vulcanizates produced from the mixtures claimed in claims 1 and 2 by sulfur vulcanization.

## Revendications

1. Mélanges à base de caoutchouc contenant du noir de fumée et d'autres constituants classiques pour mélanges, à base de polybutadiène, caractérisés en ce qu'on utilise pour 100 parties en poids de caoutchouc 50 à 140 parties en poids de noir de fumée et en ce que le polybutadiène a une viscosité Mooney ML 1 + 4 (100°C) de 30 à 100 UM et une viscosité Brookfield, mesurée sur une solution à 5,43% en poids dans le toluène à 25°C de 30 à 100 mPa.s, le rapport de la viscosité Mooney à la viscosité Brookfield ayant une valeur de 1:0, 5-2,3 UM/mPa.s.

2. Mélanges suivant la revendication 1, caractérisés en ce que la quantité de noir de fumée est de 80 à 120 parties en poids, la viscosité Mooney est de 50 à 70 UM, la viscosité Brookfield est de 50 à 70 mPa.s et le rapport des viscosités est de 1:0,7 à 1,5 UM/mPa.s.

3. Vulcanisats produits à partir des mélanges suivant les revendications 1 et 2 par vulcanisation au soufre.